# EUROPEAN PATENT APPLICATION

(11) **EP 1 956 390 A2**
(43) Date of publication of application: **13.08.2008**
(21) Application number: 08101452.4
(22) Date of filing: 08.02.2008
(51) Int. Cl.: G01S 13/86

(54) **System and method for sensor fused navigation**

(30) Priority: 12.02.2007 US 673906
(71) Applicant: Honeywell International Inc., Morristown, NJ 07962 (US)
(72) Inventor: Krishnaswamy, Kailash, Little Canada, IN 55117 (US)
(74) Representative: Buckley, Guy Julian

(57) **Abstract**

A navigation system is provided. The navigation system comprises a plurality of navigation sensors, each of the plurality of navigation sensors configured to provide data for at least one of a plurality of rigid body states such that data for each of the plurality of rigid body states is provided by one or more of the plurality of navigation sensors, wherein one of the plurality of navigation sensors is a stereo vision sensor; and a processing unit coupled to the plurality of navigation sensors, the processing unit configured to integrate together the data for each of the plurality of rigid body states to obtain a combined state estimate for each of the plurality of rigid body states.

## Description

### CROSS-REFERENCE TO RELATED APPLICATIONS

This application is related to co-pending United States patent application serial number 11/673893, filed on February 12, 2007 entitled "System and Method for Motion Estimation Using Vision Sensors", attorney docket number H0013070-5607, hereby incorporated herein by reference, and referred to herein as the "'13070 Application".

### BACKGROUND

Many Guidance, Control, and Navigation (GNC) applications are closed loop systems and the inaccuracies induced by one of the subsystems (e.g. the guidance subsystem, control subsystem or navigation subsystem) are rectified by appropriate design of the others. However, situations arise when precise navigation is necessary. For example, precision landing of a craft requires precise navigation. On and around Earth, precise navigation can usually be resolved with the aid of a Global Positioning System (GPS) sensor.

However, GPS signals are not always available. For example, GPS is unavailable during precision landing on other planetary bodies. The absence of GPS poses a significant challenge in real time, precise, localization of a spacecraft or a planetary/lunar lander. In addition, the accuracies and sensing methodology with which one can determine the state of a static object in space vary significantly with that of a moving object. Stringent requirements on precision landing dictate stringent performance requirements on the navigation system. In addition, situations can occur on and around Earth when GPS signals are also unavailable. For example, a vehicle navigating through large canyons or near tall buildings. When GPS signals are not available precision navigation becomes more difficult.

### SUMMARY

In one embodiment, a navigation system is provided. The navigation system comprises a plurality of navigation sensors, each of the plurality of navigation sensors configured to provide data for at least one of a plurality of rigid body states such that data for each of the plurality of rigid body states is provided by one or more of the plurality of navigation sensors, wherein one of the plurality of navigation sensors is a stereo vision sensor; and a processing unit coupled to the plurality of navigation sensors, the processing unit configured to integrate together the data for each of the plurality of rigid body states to obtain a combined state estimate for each of the plurality of rigid body states.

### DRAWINGS

Figure 1 is a high level block diagram depicting a navigation system according to one embodiment of the present invention.
Figure 2 is a flow chart depicting a method of navigating a vehicle according to one embodiment of the present invention.

### DETAILED DESCRIPTION

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. It should be understood that the exemplary method illustrated may include additional or fewer steps or may be performed in the context of a larger processing scheme. Furthermore, the method presented in the drawing figures or the specification is not to be construed as limiting the order in which the individual steps may be performed. The following detailed description is, therefore, not to be taken in a limiting sense.

Embodiments of the present invention enable precision navigation without the use of Global Position System (GPS) signals. In particular, embodiments of the present invention integrate state estimates from a plurality of sensors to obtain precise estimates of a vehicle's state.

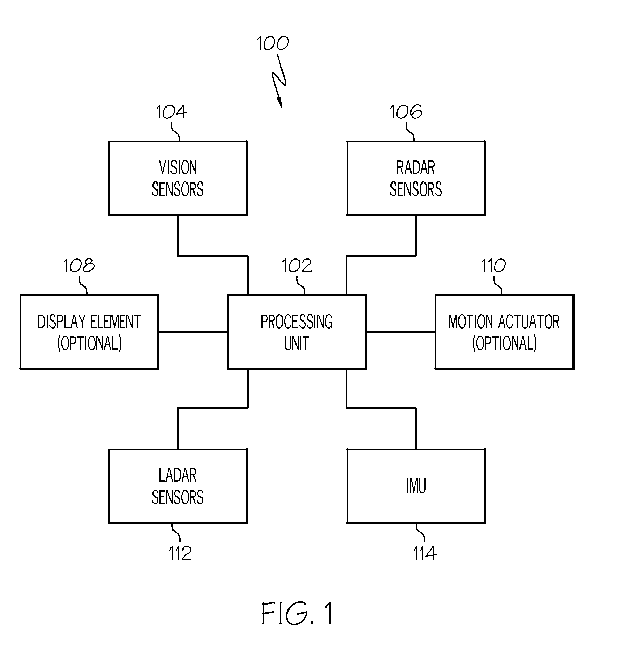

Figure 1 is a high level block diagram depicting a navigation system 100 according to one embodiment of the present invention. Navigation system 100 includes a processing unit 102 coupled to a plurality of navigation sensors. Navigation system 100 can be used in various vehicles, including but not limited to automobiles, aircraft, unmanned air vehicles, space craft, lunar landers, and space probes, etc. In Fig. 1, the navigation sensors include vision sensors 104, RADAR sensors 106, LADAR sensors 112, and an inertial measurement unit 114. However, it is to be understood that embodiments of the present invention are not to be so limited.

Vision sensor 104 can be implemented as an optical flow based vision sensor and/or an image registration (scene matching) based vision sensor. An optical flow based vision sensor estimates motion of objects in an image by tracking the motion of brightness patterns in the image. In other words, the movement of a brightness pattern (e.g. a pattern representing an object such as a building) indicates the motion of the vehicle relative to the object represented by the brightness pattern. For example, a brightness pattern moving to the left at a particular rate indicates the rate of movement of the vehicle to the right relative to the object represented by the brightness pattern. An image registration based vision sensor converts different images into one coordinate system in order to compare the location of features in the different images. The difference in location of the features in the different images indicates the motion of the vehicle.

Radio Detection and Ranging (RADAR) sensors 106 uses radio waves to detect the apparent motion of objects within range of RADAR sensors 106 as known to one of skill in the art. The apparent motion of objects detected by RADAR sensors 106 indicates the relative motion of system 100. Similarly, Laser Detection and Ranging (LADAR) sensors 112 (also referred to as Light Detection and Ranging or LIDAR) use electromagnetic waves to detect the apparent motion of objects within range of the LADAR sensors 112. However, LADAR sensors 112 use shorter wavelengths than RADAR sensors 106. In particular, LADAR sensors 112 use ultraviolet, visible, or near infrared waves to detect motion. The operation of LADAR sensors 112 is known to one of skill in the art and not discussed further herein.

Inertial measurement unit (IMU) 114 uses accelerators and gyroscopes to measure translational and rotational acceleration about three orthogonal coordinate axes as known to one of skill in the art. RADAR sensors 106, LADAR sensors 112, vision sensors 104, and IMU 114 each provide state estimate data for at least one of a plurality of rigid body vehicle states. The plurality of rigid body states defines the motion of the vehicle. In particular, there are twelve rigid body states used in this embodiment. The twelve rigid body states used include three translational velocities along three orthogonal coordinate axes, three rotational velocities about the three coordinate axes, three linear positions (one for each of the three coordinate axes), and three attitudes (e.g. yaw, pitch, and roll). For example, vision sensors 104 only provide attitude change and position change whereas, RADAR sensors 106 can provide velocity information.

Each sensor discussed above has weaknesses and strengths. For example, an optical flow based vision sensor suffers from assumptions that are made about the scene that is being seen by the camera, e.g. an optic flow based sensor designed for wide-open countryside can easily fail if tested in the urban canyon of a city. However, optical flow based vision sensors suffer from less drift than IMU 114. Also, RADAR sensors 106 can provide good estimates of velocity along its longitudinal body axis, but only when the incident waves get reflected by a surface. Hence, each sensor has a well-defined region of operation or a well-defined region of failure. Embodiments of the present invention enable the exploitation of the benefits of each sensor in its respective domain of operation.

In particular, processing unit 102 is configured to combine the state estimates from each sensor in order to take advantages of the strengths of each sensor. Processing unit 102 receives the state estimates for each of the 12 rigid body states. Since each sensor provides a state estimate for at least one of the 12 rigid body states, processing unit 102 receives more than one state estimate for at least one of the 12 rigid body states (i.e. there are redundant state estimates for at least one of the 12 rigid body states). For example, both IMU 114 and RADAR sensor 106 provide translational velocity estimates. In fact, in some embodiments, a plurality of state estimates is received for each of the 12 rigid body states. Processing unit 102 combines the respective state estimates received for each of the 12 rigid body states to obtain 12 combined state estimates. The state estimates for each rigid body state are combined in a manner to exploit the known advantages of each sensor.

For example, in this embodiment, processing unit 102 is configured to combine the state estimates using a Kalman filter. Although the general operation of Kalman filters are known to one of skill in the art, the Kalman filter used in this embodiment is modified to account for a delay in state estimates received from vision sensors 104. For example, a combined estimate from the Kalman filter for each rigid body state is associated with a moment in time, T1. Processing unit 102 associates delayed state estimates received at a later time T2 from vision sensors 104 with the corresponding combined estimates, in this example the combined estimates for time T1. The Kalman filter is configured to incorporate the delayed state estimates received at time T2 into the corresponding combined estimate for time T1. Changes to the combined estimate are then propagated forward to any combined estimates obtained after time T1.

In addition, in some embodiments, a complementary filter is used in place of a Kalman filter. The general operation of complementary filters is known to one of skill in the art. However, in embodiments of the present invention using complementary filters, the complementary filters are configured to adjust for delays in receiving state estimates from vision sensors 104. For example, in some such embodiments, the complementary filters are configured to selectively combine redundant state estimates based on various criteria, such as the length of the time period for the measurement (short or long), the surrounding environment, etc. In other words, which sensor's state estimate is used depends on various criteria such that the strengths of the different sensors can be exploited.

For example, IMU 114 is accurate for short time periods but becomes less accurate for longer time periods whereas vision sensors 104 are more accurate than IMU 114 for long time periods but take longer to process the state result. Therefore, the complementary filter can be configured to rely on IMU data for short time periods and to rely on vision sensors 104 for longer timer periods (where what defines a short time period is determined by the accuracy of the IMU and depends on the system in which it is being used). In addition, processing unit 102 stores the complementary filter combined state estimates and associates them with a moment in time. Once state estimates are received from vision sensors 104 processing unit 102 uses the complementary filters to incorporate the vision sensors 104 state estimates into the corresponding combined estimate and propagate any changes forward as described above.

Processing unit 102 uses instructions for carrying out the various process tasks, calculations, and generation of signals and other data used in the operation of system 100, such as combining state estimates from a plurality of sensors. The instructions can be implemented in software, firmware, analog or digital electronics, or any computer readable instructions. These instructions are typically stored on any appropriate computer readable medium used for storage of computer readable instructions or data structures. Such computer readable media can be any available media that can be accessed by a general purpose or special purpose computer or processor, or any programmable logic device.

Suitable computer readable media may comprise, for example, non-volatile memory devices including semiconductor memory devices such as EPROM, EEPROM, or flash memory devices; magnetic disks such as internal hard disks or removable disks (e.g., floppy disks); magneto-optical disks; CDs, DVDs, or other optical storage disks; nonvolatile ROM, RAM, and other like media. Any of the foregoing may be supplemented by, or incorporated in, specially-designed application-specific integrated circuits (ASICs). When information is transferred or provided over a network or another communications connection (either hardwired, wireless, or a combination of hardwired or wireless) to a computer, the computer properly views the connection as a computer readable medium. Thus, any such connection is properly termed a computer readable medium. Combinations of the above are also included within the scope of computer readable media.

In operation, each of vision sensors 104, RADAR sensors 106, LADAR sensors 112, and inertial measurement unit 114 obtain state estimates for at least one of the 12 rigid body states. Processing unit 102 receives the state estimates from each of the sensors and combines the state estimates to obtain a combined state estimates. Furthermore, in some embodiments, processing unit 102 receives data from each of the sensors and calculates state estimates based on the data received from each of the sensors. Processing unit 102 then combines the calculated state estimates into combined state estimates. The combined state estimates are enhanced over individual state estimates because processing unit 102 combines the state estimates in order to take advantage of the strengths of each sensor. In addition, processing unit 102 is configured to store and update combined state estimates once delayed state estimates are received from vision sensors 104 in some embodiments. Although delayed state estimates are received from vision sensors 104 in some embodiments, in other embodiments, delayed state estimates can also be used from other navigation sensors. In such embodiments, processing unit 102 is configured to store and update combined state estimates once delayed state estimates from one or more other navigation sensors are received.

The combined estimates are optionally displayed on a display element 108, in some embodiments. For example, an aircraft using system 100 can use display element 108 to display to a pilot of the aircraft where the vehicle is located on a map. In other embodiments, processing unit 102 uses the combined estimate to determine the necessary actions to take in order to reach a programmed destination. In some such embodiments, processing unit 102 generates control signals which are sent to one or more movement actuators 110 to control the movement of the vehicle. For example, processing unit 102 can control the flight of an unmanned aerial vehicle (UAV) based on control signals transmitted to movement actuators (such as the throttle, wing flaps, etc.) in the UAV to control the pitch, yaw, thrust, etc. of the UAV. Notably, although processing unit 102 generates control signals in some embodiments, in other embodiments the control signals can be generated in other ways. For example, in some embodiments, one or more second processing units generate the control signals based on the combined estimate calculated by processing unit 102.

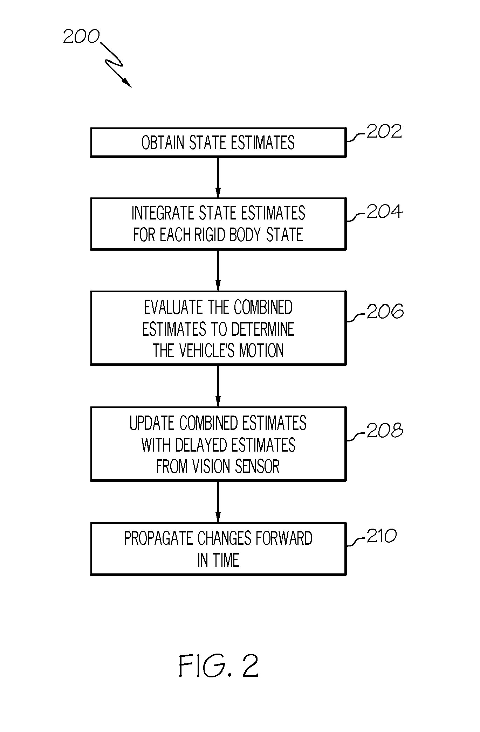

Figure 2 is a flow chart depicting a method 200 of navigating a vehicle according to one embodiment of the present invention. Method 200 can be used in a motion estimating system such as system 100 above. In particular, in some embodiments, method 200 is implemented in a computer readable medium for use by a processing unit (such as processing unit 102). At 202, a plurality of state estimate is obtained from a plurality of navigation sensors. In particular, a state estimate for at least one of a plurality of rigid body states is obtained from each of the plurality of navigation sensors. Hence, there are redundant state estimates for at least one of the plurality of rigid body states.

The rigid body states define the vehicles motion as described above. In this embodiment, 12 rigid body states are used. However, it is to be understood that in other embodiments, any appropriate number of rigid body states can be used. In addition, in this embodiment, one of the navigation sensors includes a vision sensor. The other navigation sensors of the plurality of sensors can include, but are not limited to, an inertial measurement unit (IMU), a LADAR sensor, and a RADAR sensor.

The processing unit integrates the received state estimates at 204. In particular, the processing unit integrates the redundant state estimates for each rigid body state to obtain 12 combined estimates. In some embodiments, the processing unit uses a Kalman filter to integrate the state estimates together. In other embodiment, the processing unit uses a complementary filter to integrate the state estimates together.

At 206, the combined state estimates are evaluated to determine the vehicle's motion. For example, evaluating the combined estimates determines the vehicle's linear position along three coordinate axes, and the vehicle's pitch, yaw, and roll. At 208, the combined estimates are updated with corresponding delayed state estimates received from the vision sensor as described above.

At 210, changes made in updating the combined estimates are propagated forward in time. For example, delayed state estimates received at time T2 which correspond to measurements taken at time T1 are used to update the corresponding combined estimate for time T1. Combined estimates obtained after time T1 are then updated with the changes to reflect the changes to the combined estimate for time T1. One such situation in which it is important to propagate forward the changes occurs when current state estimates (e.g. position) rely on previous state estimates (e.g. current position is determined based on distance traveled from previous position).

It is to be understood that method 200 is provided by way of example and not by way of limitation. In particular, the steps in method 200 are not to be interpreted to limit the order in which the individual steps may be performed. For example, in some embodiments, the combined estimates are updated with delayed vision sensor estimates at 208 and changes propagated forward in time at 210 prior to evaluating the combined estimates at 206.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A navigation system (100) comprising:
a plurality of navigation sensors (104, 106, 112, 114), each of the plurality of navigation sensors configured to provide data for at least one of a plurality of rigid body states such that data for each of the plurality of rigid body states is provided by one or more of the plurality of navigation sensors, wherein one of the plurality of navigation sensors is a stereo vision sensor (104); and
a processing unit (102) coupled to the plurality of navigation sensors (104, 106, 112, 114), the processing unit (102) configured to integrate together the data for each of the plurality of rigid body states to obtain a combined state estimate for each of the plurality of rigid body states.

2. The navigation system (100) of claim 1, wherein the plurality of navigation sensors (104, 106, 112, 114) further comprise at least one of a RADAR sensor (106), a LADAR sensor (112), and an inertial measurement unit (114).

3. The navigation system (100) of claim 1, wherein the processing unit (102) is configured to use a Kalman filter in order to integrate together the data for each of the plurality of rigid body states.

4. The navigation system (100) of claim 1, wherein the processing unit (102) is configured to use complementary filters in order to integrate together the data for each of the plurality of rigid body states.

5. The navigation system (100) of claim 1, wherein the plurality of rigid body states comprises at least 12 rigid body states.

6. The navigation system (100) of claim 1, further comprising a display unit (108) configured to display the combined state estimates according to control signals received from the processing unit (102).

7. The navigation system (100) of claim 1, further comprising one or more motion actuators (110) configured to control the motion of a vehicle according to control signals calculated based on the combined state estimates.

8. The navigation system (100) of claim 1, wherein the processing unit (102) is further configured to update the combined state estimates with delayed state estimates from at least one of the plurality of navigation sensors (104, 106, 112, 114).
